# EUROPEAN PATENT SPECIFICATION

(11) **EP 1 190 900 B1**
(45) Date of publication and mention of the grant of the patent: **28.05.2008**
(21) Application number: 01203342.9
(22) Date of filing: 04.09.2001
(51) Int. Cl.: B60P 3/20

(54) **Support unit for rotatable and slidable partition walls typically for isothermal vans**
Schieb- und drehbare Trägervorrichtung für Trennwände, insbesondere für isothermische Lastkraftwagen
Support coulissant et rotatif pour cloisons de séparation, en particulier pour fourgons isothermes

(30) Priority: 08.09.2000 IT RE000029 U; 15.05.2001 IT RE010018 U
(43) Date of publication of application: 27.03.2002
(73) Proprietor: Pommier Furgocar S.r.l., Roncocesi, 42100 Reggio Emilia (IT)
(72) Inventor: Panciroli, Marco, c/o Pommier Furgocar S.r.l., Roncocesi, 42100 Reggio Emilia (IT)
(74) Representative: Corradini, Corrado

(56) References cited:
- EP-A- 0 994 230
- DE-A1- 19 910 177
- GB-A- 2 228 453
- US-A- 3 352 257
- US-A- 3 433 180

## Description

This invention relates to movable transverse partition walls used in isothermal vans to partition its load compartment into regions for containing different products.

Such walls are supported by the roof of the load compartment in such a manner as to occupy two stable positions, in one of which they are disposed vertically in order to partition the load compartment in the stated manner, whereas in the other they are disposed virtually horizontal against said roof, to enable the goods to be handled.

For positioning said walls, support units are known comprising at least one longitudinal guide which slidingly supports a carriage from which the wall is suspended. Preferably for each wall there are provided two carriages slidingly supported by respective longitudinal guides which are fixed to the roof of the load compartment. The upper edge of the wall is hinged to said carriages on a horizontal axis lying transversely to the load compartment.

Said hinging is achieved by two brackets to be connected to the wall, gas springs being interposed between said brackets and said carriages to facilitate the lifting of the wall towards said virtually horizontal position.

Means are also provided to lock the carriages along their guides when the partition wall is in said vertical position and virtually horizontal position.

They comprise a holed plate, commonly known as a rack, which is associated with the carriage guide, and a latch which projects from the upper face of the carriage, to be constantly forced towards the rack by rearward-lying elastic thrust means.

The latch is hooked to an articulated frame hinged to the carriage and arranged to assume a locking configuration, established by said elastic means, in which the larch makes contact with the rack, and a releasing configuration, determined by the intervention of the operator, in which the thrust of the elastic means is overcome, so that the latch disengages from the rack.

With reference to the partition wall, the far end of the frame is hinged to the carriage by a stationary horizontal transverse pin, whereas the near end thereof is connected to the carriage by a horizontal transverse pin which can slide through a certain distance relative to the length of the carriage.

Connected to said movable pin there is a flexible tie such as a cord or a tape which extends downwards against the partition wall, where it can be gripped by the operator.

By pulling said cord or tape, the operator changes the shape of the frame against the action of the elastic means which act on the latch, with simultaneous disengagement of the latch from the rack.

Such support units have proved unsatisfactory because of the presence of said release tie.

In this respect, each time the position of the partition wall is to be changed, the operator has to carry out a relatively lengthy, complex and heavy operation, because of the need to maintain the latch released by means of said tie, while at the same time sliding the wall along the runways.

EP-A-0994230 representing the most relevant prior art document describes a supporting assembly for a swing-down movable partition for bodies of trucks, which comprises a longitudinal guide which is fixed to the ceiling of the body, an elongated carriage provided with pairs of coplanar bearings for sliding in the guide, and a bracket for supporting the partition which is pivoted about an axis which lies transversely to the carriage, a spring/damper unit which is associated with the carriage by means of one end and is associated with the bracket by means of the other end. In particular, the bracket comprises an hammer for automatically locking the sliding of the carriage in the guide during lifting and lowering of the partition and when the partition is in the vertical position.

This supporting assembly requires the use of the spring/damper unit to keep locked the sliding of the carriage and to prevent it from moving, with the corresponding negative repercussions on reliability and on the assembly costs and times of the entire locking mechanism.

US 3,433,180 describes a bulkhead assembly for bracing freight in a cargo area embodying an operating mechanism for the bulkhead lock comprising locking pins adapted to be received in apertures formed in tracks that extend along the length of the cargo area.

The operating mechanism described therein appears to be structurally quite complex.

The main object of this invention is to provide a support unit which facilitates and simplifies the positioning of such movable partition walls, within the context of a simple, robust, reliable and low cost construction.

This object is attained by virtue of the characteristics indicated in the claims.

To attain said object, according to the invention the release of the latch is controlled by the rotary movement of the partition wall, as described in detail hereinafter, so enabling the flexible tie which releases the latch to be eliminated. All the objects of the invention are hence attained by virtue of the aforestated solution, in that on moving the partition wall the operator obtains automatic disengagement of the latch by an operation which has in any event to be carried out, namely the rotation of the partition wall.

Specifically, between the wall and the latch there is interposed a linkage system according to the technical features of the characterizing portion of claim 1.

Said release member can be shaped such as to interfere with said terminal pin of the toggle device by sliding contact.

Preferably said member is shaped to engage said pin by rolling contact, so evidently extending the useful life of the two parts.

The characteristics and constructional merits of the invention will be apparent from the ensuing detailed description, given with reference to the figures of the accompanying drawings, in which:
Figure 1 is a partial perspective view with parts exploded, showing a first embodiment of a unit according to the invention in the configuration in which the partition wall is locked in the vertical position.
Figure 2 is a partly sectional side view in the direction II of Figure 1.
Figure 3 is a view similar to Figure 2, showing the unit in the configuration assumed when the partition wall has been rotated through the angle by which the latch is automatically released.
Figure 4 is a view similar to the preceding, showing the unit in the configuration in which the partition wall is locked in the horizontal position.
Figure 5 is a view similar to Figure 1, showing a second embodiment of the invention.
Figure 6 is a partly sectional side view in the direction VI of Figure 5.
Figure 7 is a view similar to Figure 6, showing the unit in the configuration assumed when the partition wall has been rotated through the angle by which the latch is automatically released.
Figure 8 is a view similar to the preceding, showing the unit in the configuration in which the partition wall is locked in the horizontal position.
Figure 9 is a view similar to Figure 6, the wall being shown in its vertical position but with the latch released.

Firstly it should be noted that in both embodiments, identical or equivalent elements are indicated by the same reference numerals.

It should also be noted that although embodiments are described comprising two guides and two carriages for supporting the wall, the description also applies to an embodiment with a central guide in which each wall is supported by a single carriage.

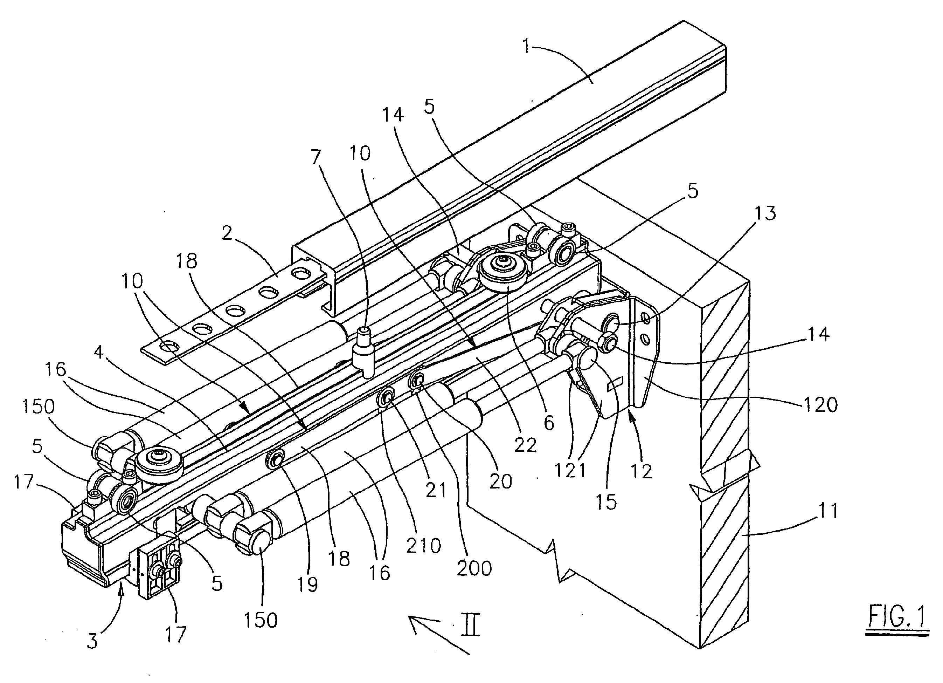

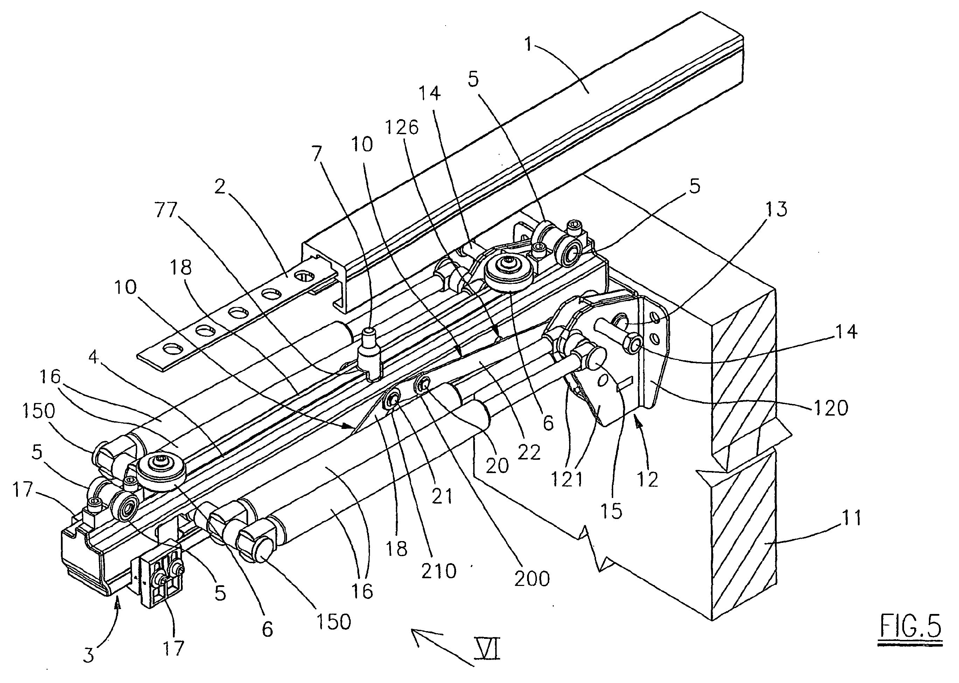

The unit comprises two identical overhead guides 1, of which only one is shown in Figures 1 and 5 for reasons of simplicity and clarity, these being intended to be fixed in known manner to the roof of the load compartment of an isothermal van, or a similar goods transport vehicle, not shown for the aforesaid reasons.

Each guide 1 consists of profile bar of metal, typically aluminium, presenting two mutually communicating superposed longitudinal seats, of which the upper seat contains a rack 2 of metal, typically aluminium, along its entire length, and the lower seat, which presents a lower opening along its entire length, acts as a runway for a respective carriage 3.

The carriage 3 comprises a profile bar of metal, typically aluminium, the upper face of which presents a longitudinal rib 4 along its entire length, to be received between the sides of the lower opening in the guide 1.

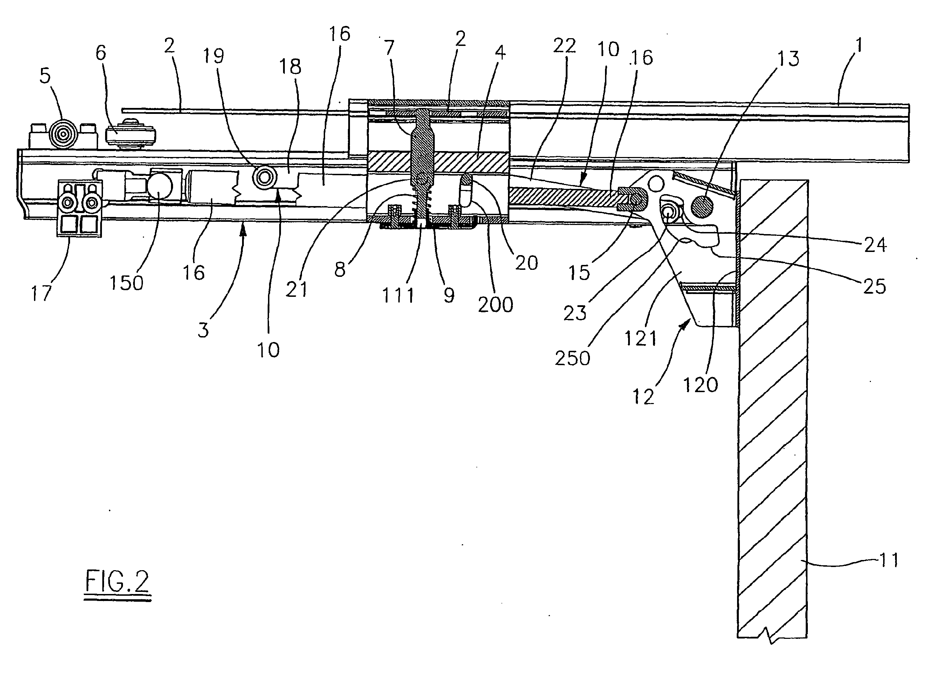

At each end of said rib 4 there are two idle coaxial rollers 5 of transverse horizontal axis, they being in the form of bearings in the illustrated example, and an idle roller 6 of vertical axis, also in the form of a bearing. Said two opposite groups of three rollers 5 and 6 engage the lower longitudinal seat of the overlying guide 1 (Figures 2 to 4 and 6 to 9).

The said rib 4 presents a vertical central hole in which a latch 7 (see Figures 1-4) is slidingly received in order to engage the holes of the overlying rack 2, and is constantly urged elastically towards this latter by a compressed spring 8 located between a shoulder of the latch 7 and a retention plate 9 fixed below the carriage 3.

According to a variant shown in Figures 5-9, said latch 7 and said spring 8 are positioned within a sleeve 77 which rises from said plate 9, and is inserted from below into said central vertical hole.

At said latch 7, said plate 9 presents a coaxial hole 111 by which the operator can verify when the latch 7 is retracted, i.e. disengaged from the rack 2.

Two separate systems, one automatic and the other manual, are provided for disengaging the latch, and will be described hereinafter.

As can be seen in all the accompanying figures, the carriage 3 is connected to the partition wall 11 of the load compartment of an isothermal van, or other similar goods transport vehicle, by two brackets 12 positioned on one side and the other of one end (the right end in the figures) of the carriage 3.

Each bracket 12 comprises a holed connection plate 120 to be fixed by threaded means to the wall 11, and two perpendicular flanges 121 which are hinged to the carriage 3 by the horizontal pin 13 which forms the support and rotation axis for the partition wall 11.

The reference numeral 14 in Figures 1 and 5 indicates a horizontal latch which passes through the two opposite pairs of flanges 121 and the carriage 3, to maintain the brackets 12 in their correct operative position during the assembly of the wall 11.

In addition, at the opposite ends of the carriage 3 there are two robust transverse horizontal through pins 15 and 150, the first 15 of which, i.e. that closer to the wall 11, also passes through the four flanges 121.

On the opposite ends of said two pins 15 and 150 there are pivoted the rods and the bodies, respectively, of two opposite pairs of pneumatic thrust devices, commonly known as gas springs 16.

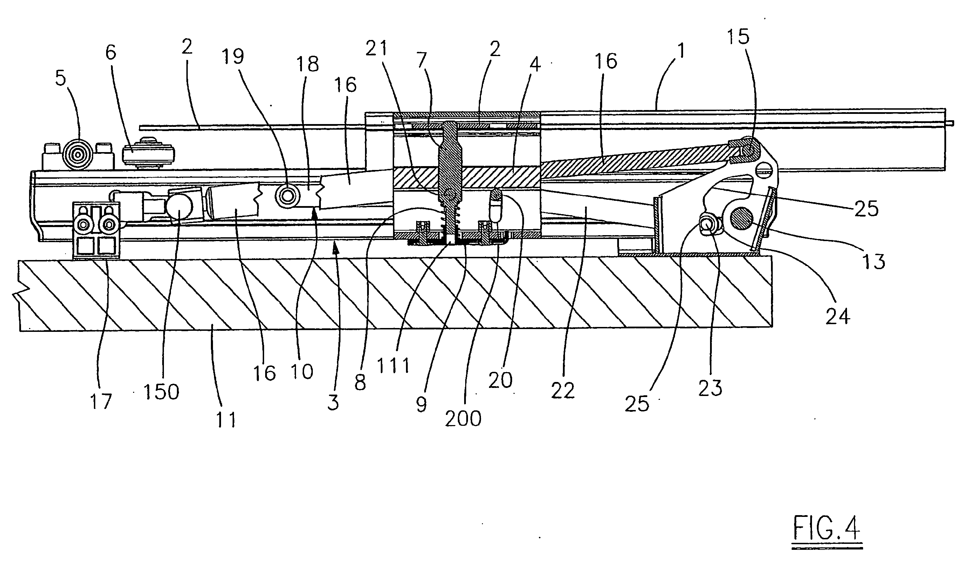

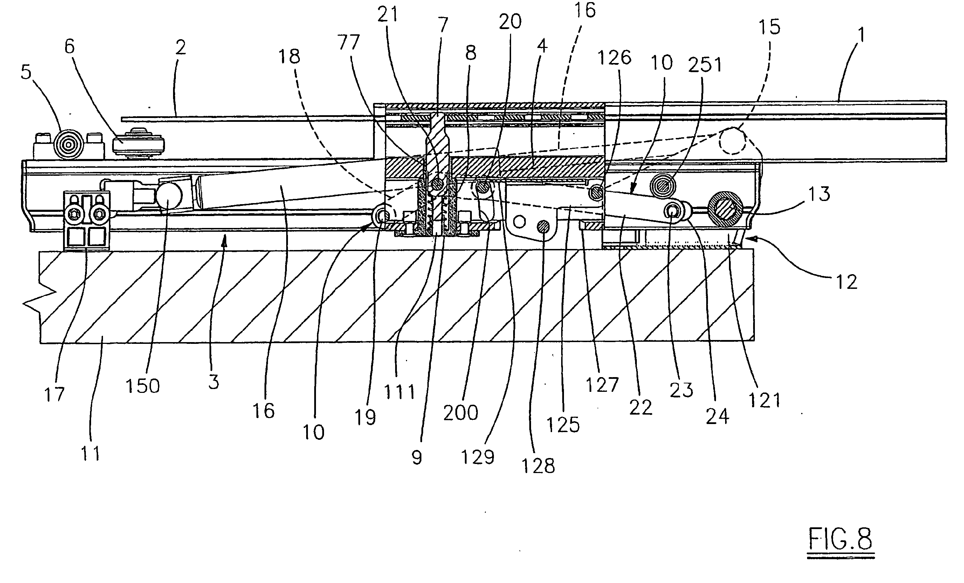

The purpose of these latter is to aid the operator while he rotates the wall 11 from its closed vertical position (see Figures 1, 2, 5 and 6) to its open horizontal position (see Figures 4 and 8), in the second of which the wall 11 lies against two blocks 17 fixed to one end of the carriage 3.

When the operator starts to rotate the wall 11 in the opposite direction, he is aided in overcoming the thrust of the springs 16 by the weight of the wall 11 itself. During said rotations (both upward or opening and downward or closure) of the wall 11 the latch 7 automatically disengages by virtue of a toggle device indicated overall by 10.

The device 10 comprises two identical levers 18 which are positioned against the sides of the carriage 3 and have their opposite ends connected together by two transverse horizontal pins 19 and 20 which pass through the carriage 3.

The first 19 of said pins, namely the distal with reference to the wall 11, is locked in a fixed position relative to the carriage 3, whereas the second 20, or proximal, which extends beyond the latch 7, is slidably received in two suitably dimensioned off-vertical slots 200 provided in the sides of the carriage 3.

Between said two pins 19 and 20 there is a peg 21 which is fixed transversely to the latch 7, the peg 21 being coupled to said two levers 18 and being guided by two suitably dimensioned substantially vertical slots 210 (see Figures 1 and 5) provided in the sides of the carriage 3.

On said pin 20 there are pivoted the distal ends of two connecting rods 22, the opposite ends of which are connected together by a pin 23 which is guided by two suitably dimensioned horizontal slots 24 (see Figures 2, 4 and 6-9) provided in the sides of the carriage 3.

According to the invention, the opposite ends of the pin 23 extend for a certain distance beyond the respective stop members, such as snap rings, to provide two abutments positioned along the trajectory followed by respective release members carried by the wall 11.

In the embodiment of Figures 1-4 said release members are shaped to interfere with said pin 23 by sliding contact, whereas in the embodiment of Figures 5-9 the release members are arranged to interfere with the pin 23 by rolling contact.

As can be seen in Figures 2-4, said terminal portions of the pin 23 are received in respective arcuate slots 25 provided in those two flanges 121 lying closer to the carriage 3.

The centre of curvature of said slots 25, which subtend an effective angle of 90° coincides with the axis 13 of rotation of the partition wall 11.

Said slots 25 present a width greater than the diameter of the pin 23, which normally does not contact the opposing sides of the slot 25.

Again, along that side of the slots 25 which faces the hinging axis 13 there is a triangular cusp 250 with an arcuate vertex and its base blending into the rearward connecting side.

The tip of the cusp 250 is spaced from the facing side of the slot 25 by a distance slightly greater than the diameter of the pin 23.

Moreover, during a complete rotation of the wall 11 between the vertical position of Figure 2 and the horizontal position of Figure 4, the tip of the cusp 250 travels through an angle of about 65° to the axis of the pin 23.

It should be noted that the angular travel of the cusp 250 can be greater than that shown, i.e. that instead of said tip the cusp will present an arcuate portion parallel to the sides of the slot 25.

In the embodiment shown in Figures 5-9, instead of the cusp 250 an idle roller 251 is provided rotatably mounted on the inner flange 121 of the respective bracket 12, and having its axis parallel to the pin 13 which supports the wall 11 and about which it rotates.

Moreover, the distance between the axes of the pin 13 of the wall 11 and the pin 23 of the device 10 is less than that between said pin 13 and the roller 251, said pin 23 and said roller 251 being dimensioned such that during the rotation of the wall 11 the two mutually interfere.

Said interference results in the rolling of the roller 251 on the pin 23.

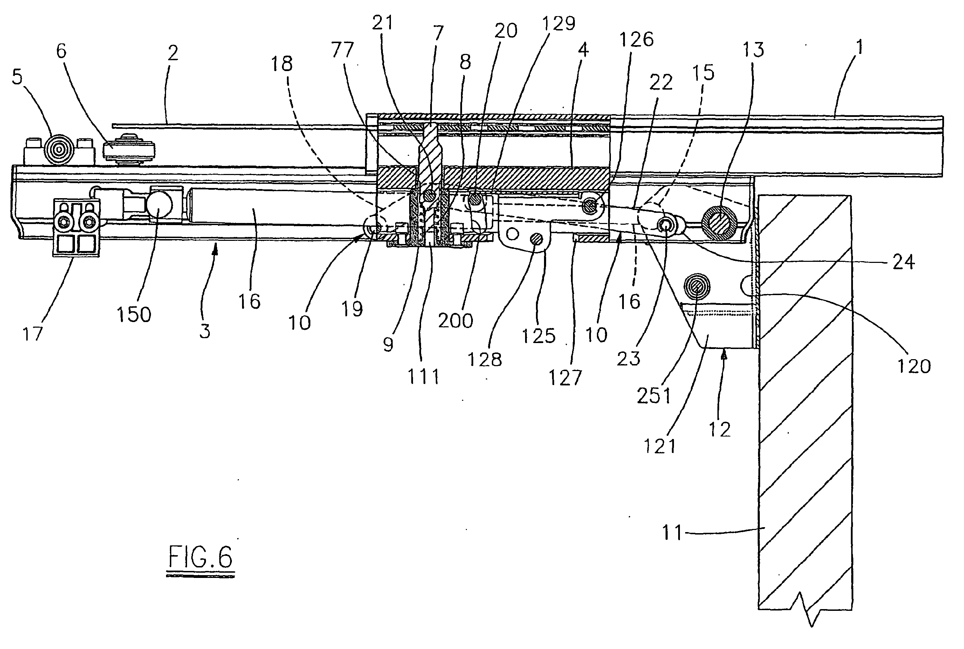

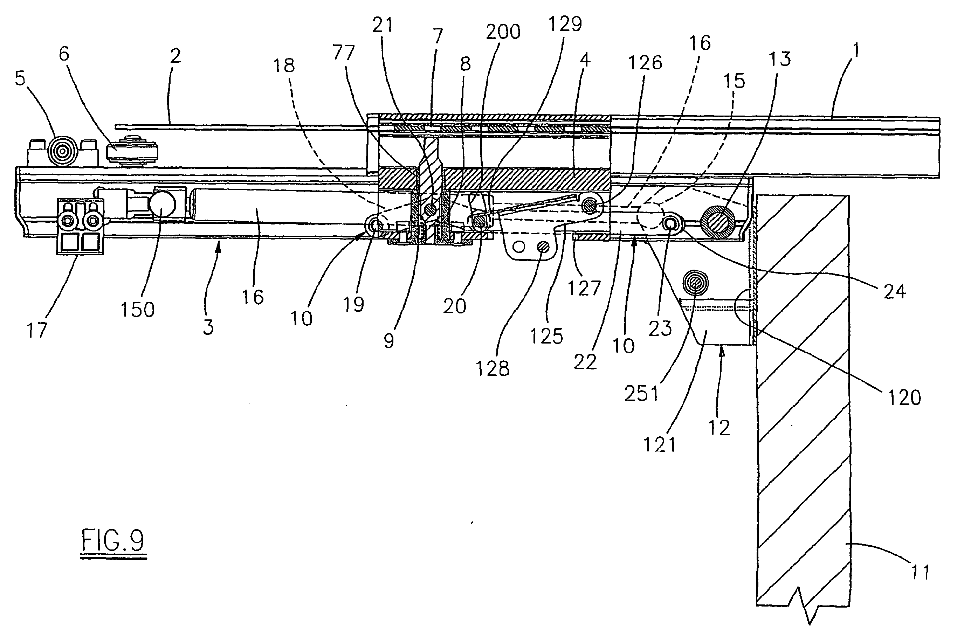

With reference to the vertical position of the wall 11 (see Figures 6 and 9), contact between the roller 251 and the pin 23 takes place after a rightward rotation of the wall 11 through about 55°, but said angle can obviously be different.

The aforedescribed unit operates as follows.

When the partition wall is in one of its stable positions, i.e. vertical as in Figures 2 and 6 or horizontal as in Figures 4 and 8, the pin 23 does not interfere with the cusp 250 or the roller 251 respectively, and the device 10, by the effect of the spring 8, assumes the illustrated obtuse angle configuration in which the latch 7 is engaged with the rack 2.

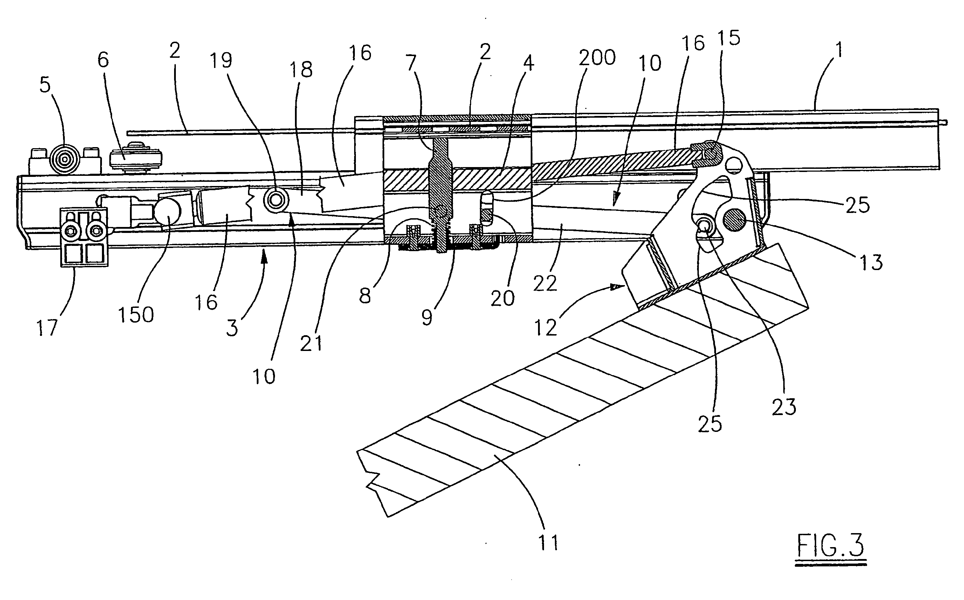

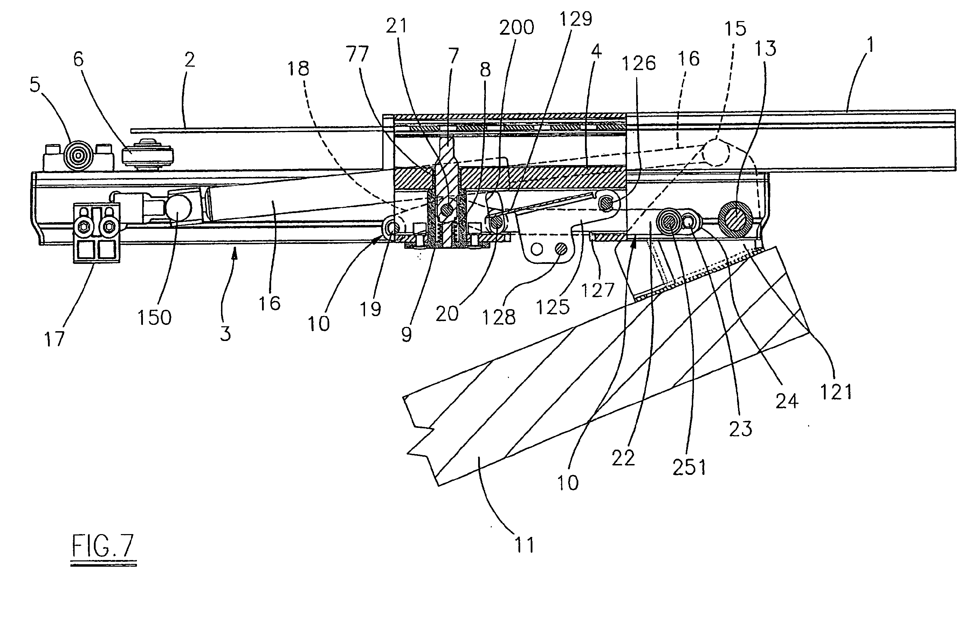

To move the partition wall 11, at that moment in the vertical (or horizontal) position, along the load compartment, the wall 11 is rotated rightwards or leftwards until it reaches the intermediate position of Figure 3 or 7, in which the cusp 250, or the roller 251 respectively, obliges the device 10 to assume a substantially rectilinear configuration, with simultaneous disengagement of the latch 7.

It is known when said intermediate position is attained, by the fact that the lower end of the latch 7 projects below the plate 9, and that the force required to rotate the wall 11 slightly increases.

After this, the wall 11, while maintaining it in the now attained inclined position, is moved towards the desired point, after which the wall 11 is either rotated into that stable position (horizontal or vertical) opposite the starting position, or is returned to said starting position.

If, on termination of said operation, the latch 7 does not match a hole of the rack 2, the two can be engaged by merely sliding the wall 11 through a short distance in one direction or the other.

As stated hereinbefore, the invention also comprises manual means for releasing the latch 7, which may be necessary in particular situations.

For example if the load compartment of the transport vehicle is practically full and the wall 11, at the moment in the vertical position, has to be moved but cannot be rotated for lack of space.

Said means are shown in Figures 5 to 9.

For each carriage 3 they comprise a profiled lever 125 which is housed in the respective carriage 3, and is pivoted to it on a transverse horizontal axis 126.

At the opposite end to said axis 126, the lever 125 presents an appendix 129 which is positioned against the lower face of the rib 4 and rests on the pin 20 by which the levers 18 and the connecting rods 22 are hinged together.

The lever 125 is also provided with a descending holed extension plate which projects beyond the lower face of the carriage 3 via an aperture 127.

Finally, the holed extension plates of the two levers 125 are connected together by a rod 128 which provides a grip for the operator.

The operation of these latter means is evident. It is sufficient to state that when the wall 11 is rotated as explained (see Figure 7), the two levers 125 follow the movements of the pins 20 determined by said rotation, whereas if the wall 11 has to be moved while maintaining it vertical for the stated reasons, the latch 7 is disengaged by the operator by means of said rod 128 which joins together the two levers 125 (see Figure 9).

The merits and advantages of the invention are apparent from the aforegoing and from an examination of the accompanying figures.

## Claims

1. A support unit for partition walls (11) typically for the load compartment of isothermal vans, comprising for each partition wall at least one carriage (3) slidable along a respective longitudinal guide (1) fixed to the roof of the load compartment, and provided with a transverse shaft (13) for supporting and hinging the partition wall (11), which can rotate between two end positions, namely vertical and virtually horizontal respectively, each carriage (3) being provided with a slidable vertical latch (7) which is constantly urged elastically towards a rack (2) carried by the respective longitudinal guide (1), **characterized in that** between said partition wall and said latch (7) there is interposed a linkage system (10) which prevents the disengagement of the latch (7) From the rack (2) when the partition wall (11) is at its two end positions, whereas it automatically releases the latch (7) from the rack (2) when the partition wall (11) is moved along its arc of rotation between the two end positions, said linkage system (10) comprising at least one pair of consecutive connecting rods (18, 22) defining a toggle device which is slidable within a guide slot (200) provided in the carriage and carries said latch (7), and which at one end (19) is hinged to the carriage (3) and at its opposite end presents a pin (23) which is guided within a rectilinear slot (24) associated with the carnage (3), and is positioned along the trajectory followed by a release member (250, 251) carried by the partition wall (11) and provided for disengaging the latch (7).

2. A unit as claimed in claim 1, **characterized by** comprising a toggle device at each end of the partition wall.

3. A unit as claimed in claim 1, **characterized by** comprising two release members, one for each end of said slidable terminal pin of the toggle device.

4. A unit as claimed in claim 3, **characterized in that** said release members are associated with usual brackets (12) provided for hinging the partition wall (11) to the carriage (3).

5. A unit as claimed in claim 1, **characterized in that** said release member is shaped to interfere with said terminal pin (23) by sliding contact.

6. A unit as claimed in claim 5, **characterized in that** said release member comprises an arcuate slot (25) which engages the respective end of said pin (23), and which lies concentric to the hinging axis (13) of the partition wall (11) except for a portion generally in the form of a cusp (250) in its central region.

7. A unit as claimed in claim 6, **characterized in that** said cusp is positioned, with reference to a complete rotation of the partition wall between said two vertical and virtually horizontal end positions, at an angle of between 55 and 75°.

8. A unit as claimed in claim 6, **characterized in that** said arcuate slot subtends an effective angle of at least 90°.

9. A unit as claimed in claim 8, **characterized in that** the cusp of said arcuate slot subtends an angle of 65° with that end of the slot distant from the partition wall (11).

10. A unit as claimed in claim 1, **characterized in that** said release member is shaped to interfere with said terminal pin (23) by rolling contact.

11. A unit as claimed in claim 10, **characterized in that** said release member comprises an idle roller (251) the axis of which is parallel to the support and rotation axis of the wall.

12. A unit as claimed in claim 11, **characterized in that** said pin and said roller are dimensioned such that the two make contact after the partition wall (11) during its opening has rotated through about 55°.

13. A unit as claimed in claim 11, **characterized in that** said idle roller is a bearing.

14. A unit as claimed in claim 1, **characterized in that** means are associated with said carriages to enable the latches (7) to be released from the racks (2) when the partition wall (11) is in a vertical position.

15. A unit as claimed in claim 14, **characterized in that** said means comprise two levers (125), one or each carriage, which at one end are hinged to the carriage on a horizontal transverse axis (126), and at their other end (129) rest on the central part of the respective toggle device, said two levers being connected together by a common operating member.

16. A unit as claimed in claim 15, **characterized in that** said two levers (125) are housed in the interior of the carriages (3), from which they emerge lowerly to be connected to said common operating member, such as a transverse rod (128).

17. A unit as claimed in claim 1, **characterized in that** each carriage is lowerly provided with an aperture (111) for the emergence of the rear end of the latch when in the release configuration.

## Patentansprüche

1. Trägervorrichtung für Trennwände (11), typischerweise für den Laderaum von Kühlwagen, welche für jede Trennwand wenigstens einen Schlitten (3) aufweist, welcher entlang einer entsprechenden an dem Dach des Laderaums angebrachten Längsführung (1) verschieblich ist, und mit einer Querwelle (13) zum Halten und gelenkigen Einhängen der Trennwand (11) versehen ist, welche zwischen zwei Endpositionen rotierbar ist, nämlich vertikal und wenigstens annähernd horizontal, wobei jeder Schlitten (3) mit einer gleitenden, vertikalen Sperrklinke (7) versehen ist, welche ständig elastisch in Richtung einer Halterung (2) gedrängt ist, welche durch die entsprechende Längsführung (1) gehalten ist, **dadurch gekennzeichnet, daß** zwischen der Trennwand und der Sperrklinke (7) ein Gestänge (10) angeordnet ist, welches das Ausrücken der Sperrklinke (7) von der Halterung (2) verhindert, wenn die Trennwand (11) sich an ihren zwei Endpositionen befindet, wohingegen es automatisch die Sperrklinke (7) von der Halterung (2) freigibt, wenn die Trennwand (11) entlang ihres Rotationsbogens zwischen den zwei Endpositionen bewegt wird, wobei das Gestänge (10) wenigstens ein Paar aufeinanderfolgender Verbindungsstangen (18,22) aufweist, welche eine Gelenkhebeleinrichtung bilden, welche innerhalb eines Führungsschlitzes (200) verschieblich ist, der in dem Schlitten vorgesehen ist und die Sperrklinke (7) trägt, und welche an einem Ende (19) gelenkig mit dem Schlitten (3) verbunden ist und an ihrem gegenüberliegenden Ende einen Bolzen (23) aufweist, welcher innerhalb eines dem Schlitten (3) zugehörigen geradlinigen Schlitzes (24) geführt und entlang einer Kurve von einem Freigabeelement (250,251) gefolgt, positioniert ist, welches von der Trennwand (11) getragen und zum Ausrücken der Sperrklinke (7) vorgesehen ist.

2. Vorrichtung nach Anspruch 1,
**dadurch gekennzeichnet, dass**
sie eine Gelenkhebeleinrichtung an jedem Ende der Trennwand aufweist.

3. Vorrichtung nach Anspruch 1,
**dadurch gekennzeichnet, dass**
sie zwei Freigabeelemente aufweist, und zwar eines für jedes Ende des verschieblichen Endbolzens der Gelenkhebeleinrichtung.

4. Vorrichtung nach Anspruch 3,
**dadurch gekennzeichnet, dass**
die Freigabeelemente mit üblichen Haltewinkeln (12) versehen sind, die zum gelenkigen Anbringen der Trennwand (11) an den Schlitten (3) vorgesehen sind.

5. Vorrichtung nach Anspruch 1,
**dadurch gekennzeichnet, dass**
das Freigabeelement so ausgebildet ist, dass es den Endbolzen (23) durch gleitenden Kontakt beeinflusst.

6. Vorrichtung nach Anspruch 5,
**dadurch gekennzeichnet, dass**
das Freigabeelement einen bogenförmigen Schlitz (25) aufweist, welcher das entsprechende Ende des Bolzens (23) in Eingriff nimmt und welcher mit Ausnahme eines Abschnitts in seinem mittleren Bereich, der im wesentlichen in der Form einer Zacke (250) ausgebildet ist konzentrisch zu der Gelenkachse (13) der Trennwand (11) liegt.

7. Vorrichtung nach Anspruch 6,
**dadurch gekennzeichnet, dass**
die Zacke bezüglich einer vollständigen Rotation der Trennwand zwischen den zwei vertikalen und im wesentlichen horizontalen Endpositionen mit einem Winkel zwischen 55° und 75° positioniert ist.

8. Vorrichtung nach Anspruch 6,
**dadurch gekennzeichnet, dass**
der bogenförmigen Schlitz einen wirksamen Winkel von mindestens 90° einnimmt.

9. Vorrichtung nach Anspruch 8,
**dadurch gekennzeichnet, dass**
die Zacke des bogenförmigen Schlitzes einen Winkel von 65° mit dem von der Trennwand (11) entfernten Ende des Schlitzes einnimmt.

10. Vorrichtung nach Anspruch 1,
**dadurch gekennzeichnet, dass**
das Freigabeelement so ausgebildet ist, dass es den Endbolzen (23) durch Abwälzen beeinflusst.

11. Vorrichtung nach Anspruch 10,
**dadurch gekennzeichnet, dass**
das Freigabeelement eine Leerlaufrolle (251) aufweist, deren Achse parallel zu der Halte- und Rotationsachse der Wand ist.

12. Vorrichtung nach Anspruch 11,
**dadurch gekennzeichnet, dass**
der Bolzen und die Rolle so dimensioniert sind, dass die zwei einander berühren, nachdem die Trennwand (11) sich während ihrer Öffnung um ungefähr 55° gedreht hat.

13. Vorrichtung nach Anspruch 11,
**dadurch gekennzeichnet, dass**
die Leerlaufrolle ein Lager ist.

14. Vorrichtung nach Anspruch 1,
**dadurch gekennzeichnet, dass**
mit den Schlitten eine Einrichtung in Verbindung steht, um es zu ermöglichen, dass die Sperrklinken (7) von den Halterungen (2) gelöst werden, wenn sich die Trennwand (11) in einer vertikalen Position befindet.

15. Vorrichtung nach Anspruch 14,
**dadurch gekennzeichnet, dass**
die Einrichtung zwei Hebel (125) aufweist, und zwar einen an jedem Schlitten, welche an einem Ende auf einer horizontalen Querachse (126) gelenkig mit dem Schlitten verbunden sind und an ihrem anderen Ende (129) auf dem mittleren Teil der entsprechenden Gelenkhebeleinrichtung ruhen, wobei die beiden Hebel mittels eines gemeinsamen Betätigungselements miteinander verbunden sind.

16. Vorrichtung nach Anspruch 15,
**dadurch gekennzeichnet, dass**
die zwei Hebel (125) in dem Inneren des Schlittens (3) untergebracht sind, aus welchem sie nach unten austreten, um mit dem gemeinsamen Betätigungselement, wie zum Beispiel einer Querstange (128), verbunden zu sein.

17. Vorrichtung nach Anspruch 1,
**dadurch gekennzeichnet, dass**
jeder Schlitten an seiner Unterseite mit einer Öffnung (111) für das Hervortreten des hinteren Endes der Sperrklinke versehen ist, wenn sie sich in der Freigabestellung befindet.

## Revendications

1. Unité de support de parois (11) de cloison notamment destinée aux compartimente de chargement de fourgons isothermes, comprenant, pour chaque paroi formant cloison, au moins un chariot (3) destiné à coulisser le long d'un guide longitudinal respectif (1) fixé au toit du compartiment de chargement, et ayant un arbre transversal (13) destiné à supporter et articuler la paroi de cloison (11), qui peut tourner entre deux positions d'extrémité, à savoir respectivement verticale et pratiquement horizontale, chaque chariot (3) étant muni d'un verrou vertical coulissant (7) qui est constamment rappelé élastiquement vers une crémaillère (2) portée par le guide longitudinal respectif (1),
**caractérisée en ce qu**'
entre la paroi de cloison et le verrou (7) est interposé un système à tringlerie (10) qui empêche la séparation du verrou (7) de la crémaillère (2) lorsque la paroi de cloison (11) est dans ses deux positions d'extrémité, alors qu'il libère automatiquement le verrou (7) de la crémaillère (2) lorsque la paroi de cloison (11) est déplacée suivant son axe de rotation entre les deux positions d'extrémité, dans laquelle le système à tringlerie (10) comprend au moins une paire de bielles consécutives (18, 22) de raccordement délimitant un dispositif à genouillère qui peut coulisser dans une fente de guidage (200) disposée dans le chariot et porte le verrou (7) et qui, à une première extrémité. (19), est articulé sur le chariot (3) et, à son extrémité opposée, présente une broche (23) qui est guidée dans une fente rectiligne (24) associée au chariot (3) et est positionnée le long de la trajectoire suivie par un organe de libération (250, 251) porté par la paroi de cloison (11) et destiné à dégager le verrou (7).

2. Unité selon la revendication 1, **caractérisée en ce qu'**elle comprend un dispositif à genouillère à chaque extrémité de la paroi de cloison.

3. Unité selon la revendication 1, **caractérisée en ce qu'**elle comprend deux organes de libération, un pour chaque extrémité de la broche terminale coulissante du dispositif à genouillère.

4. Unité selon la revendication 3, **caractérisée en ce que** les organes de libération sont associés à des équerres habituelles (12) destinées à l'articulation de la paroi de cloison (11) sur le chariot (3).

5. Unité selon la revendication 1, **caractérisée en ce que** l'organe de libération a une configuration telle qu'il rencontre la broche terminale (23) par contact coulissant.

6. Unité selon a revendication 5, **caractérisée en ce que** l'organe de libération est une fente courbe (25) qui coopère avec l'extrémité respective de la broche (23) et qui est concentrique à l'axe d'articulation (13) de la paroi de cloison (11) sauf sur une partie qui a une forme générale de lobe (250) dans sa région centrale.

7. Unité selon la revendication 6, **caractérisée en ce que** le lobe est disposé, par rapport à une rotation complète de la paroi de cloison entre les deux positions verticale et pratiquement horizontale d'extrémité, à un angle compris entre 55° et 75°.

8. Unité selon la revendication 6, **caractérisée en ce que** la fente courbe sous-tend un angle efficace d'au moins 90°.

9. Unité selon la revendication 8, **caractérisée en ce que** le lobe de la fente courbe sous-tend un angle de 65°, par rapport à l'extrémité de la fente distante de la paroi de cloison (11).

10. Unité selon la revendication 1, **caractérisée en ce que** l'organe de libération a une forme telle qu'il rencontre la broche terminale (23) par contact roulant.

11. Unité selon la revendication 10, **caractérisée en ce que** l'organe de libération comprend un rouleau fou (251) dont l'axe est parallèle au support et à l'axe de rotation de la paroi.

12. Unité selon la revendication 11, **caractérisée en ce que** la broche et le rouleau ont des dimensions telles que ces deux éléments sont en contact après que la paroi de cloison (11) pendant son ouverture a tourné d'environ 55°.

13. Unité selon la revendication 11, **caractérisée en ce que** le rouleau fou est un palier.

14. Unité selon la revendication 1, **caractérisée en ce qu'**un dispositif est associé aux chariots pour permettre aux verrous (7) d'être libérés des crémaillères (2) lorsque la paroi de cloison (11) est en position verticale.

15. Unité selon la revendication 14, **caractérisée en ce que** le dispositif comprend deux leviers (125), sur chaque chariot, qui, à une première extrémité, sont articulés sur le chariot autour d'un axe transversal horizontal (126) et, à l'autre extrémité (129), sont en appui sur la partie centrale du dispositif respectif à genouillère, les deux leviers étant raccordés l'un à l'autre par un organe commun de manoeuvre.

16. Unité selon la revendication 15, **caractérisée en ce que** les deux leviers (125) sont logés à l'intérieur des chariots (3) dont ils sortent vers le bas pour être raccordés à l'organe commun de manoeuvre, tel qu'une tige transversale (128).

17. Unité selon la revendication 1, **caractérisée en ce que** chaque chariot est muni vers le bas d'une ouverture (111) destinée à la sortie de l'extrémité arrière du verrou lorsqu'il est dans la configuration de libération.
